(19) **Europäisches Patentamt European Patent Office Office européen des brevets**

(11) **EP 4 240 650 B1**

(12) **FASCICULE DE BREVET EUROPEEN**

(45) Date de publication et mention
de la délivrance du brevet:
**04.06.2025 Bulletin 2025/23**

(21) Numéro de dépôt: **21801533.7**

(22) Date de dépôt: **28.10.2021**

(51) Classification Internationale des Brevets (IPC):
**B64D 33/02** *(2006.01)*   **B64D 29/00** *(2006.01)*
**B64C 7/02** *(2006.01)*   **F02C 7/04** *(2006.01)*

(52) Classification Coopérative des Brevets (CPC):
**B64D 33/02; B64C 7/02; B64D 29/00; F02C 7/042;
F02K 1/66; F02K 3/06;** Y02T 50/60

(86) Numéro de dépôt international:
**PCT/EP2021/079953**

(87) Numéro de publication internationale:
**WO 2022/096359 (12.05.2022 Gazette 2022/19)**

(54) **ENTRÉE D'AIR DE NACELLE D'ENSEMBLE PROPULSIF D'AÉRONEF POUR FAVORISER UNE PHASE D'INVERSION DE POUSSÉE**

GONDELLUFTEINLASS FÜR EINE FLUGZEUGANTRIEBSANORDNUNG ZUR FÖRDERUNG EINER SCHUBUMKEHRPHASE

NACELLE AIR INTAKE FOR AN AIRCRAFT PROPULSION ASSEMBLY TO PROMOTE A THRUST REVERSAL PHASE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **09.11.2020 FR 2011473**

(43) Date de publication de la demande:
**13.09.2023 Bulletin 2023/37**

(73) Titulaire: **SAFRAN AIRCRAFT ENGINES
75015 Paris (FR)**

(72) Inventeurs:
• **CHERAGA, Yacine
77550 MOISSY-CRAMAYEL (FR)**
• **MINCU, Daniel-Ciprian
77550 MOISSY-CRAMAYEL (FR)**
• **CHANEZ, Philippe Gérard
77550 MOISSY-CRAMAYEL (FR)**
• **LECORDIX, Jean-Loïc Hervé
77550 MOISSY-CRAMAYEL (FR)**

(74) Mandataire: **Argyma
14 Boulevard de Strasbourg
31000 Toulouse (FR)**

(56) Documents cités:
**CA-A- 1 209 354     FR-A1- 3 095 244
US-B2- 10 399 687**

## Description

### Domaine technique

La présente invention concerne le domaine des ensembles propulsifs d'aéronef et vise plus particulièrement une entrée d'air de nacelle d'ensemble propulsif d'aéronef.

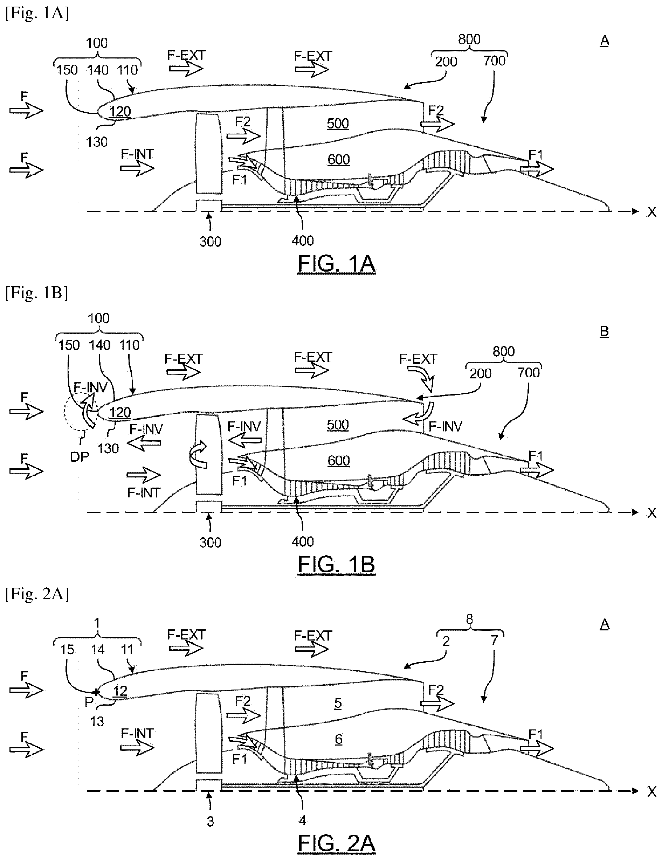

De manière connue, en référence à la [Fig.1A], un ensemble propulsif d'aéronef 800 s'étend selon un axe longitudinal X orienté d'amont en aval et comprend une turbomachine 700 et une nacelle 200. La turbomachine 700 s'étend selon l'axe longitudinal X et est configurée pour permettre la propulsion de l'aéronef à partir de l'accélération d'un flux d'air intérieur F-INT circulant d'amont en aval dans la turbomachine 700. La nacelle 200 s'étend quant à elle extérieurement autour de la turbomachine 700 selon l'axe longitudinal X et permet de guider le flux d'air intérieur F-INT dans la turbomachine 700. Par la suite, les termes « amont » et « aval » sont définis par rapport à l'orientation de l'axe longitudinal X. Les termes « intérieur » et « extérieur » sont quant à eux définis selon la direction radiale par rapport à l'axe longitudinal X.

De manière connue, comme illustré sur la [Fig.1A], la turbomachine 700 est de type à double flux et comprend à l'amont une soufflante 300 montée rotative autour de l'axe longitudinal X pour accélérer le flux d'air intérieur F-INT d'amont en aval. La turbomachine 700 comprend également, en aval de la soufflante 300, une veine primaire 400, radialement intérieure, et une veine secondaire 500, radialement extérieure, qui sont séparées par un carter 600. Le carter 600 est configuré pour guider une première partie du flux d'air intérieur F-INT, dite flux d'air primaire F1, dans la veine primaire 400 pour la combustion du carburant et une deuxième partie du flux d'air intérieur F-INT, dite flux d'air secondaire F2, dans la veine secondaire 500 afin de générer la poussée de la turbomachine 700.

De manière connue, toujours en référence à la [Fig.1A], la nacelle 200 s'étend de manière radialement extérieure à la soufflante 300 et délimite de manière radialement extérieure la veine secondaire 500. La nacelle 200 comprend à son extrémité amont une entrée d'air 100 comprenant une enveloppe externe périphérique 110 délimitant une cavité interne annulaire 120. L'enveloppe externe périphérique 110 comprend une paroi intérieure 130 tournée vers l'axe longitudinal X et une paroi extérieure 140 opposée à la paroi intérieure 130, reliées ensemble à l'amont par une lèvre d'entrée d'air 150 comprenant un bord d'attaque. L'entrée d'air 100 possède un profil arrondi aérodynamique qui permet de séparer un flux d'air amont F en le flux d'air intérieur F-INT guidé par la paroi intérieure 130 et un flux d'air extérieur F-EXT guidé par la paroi extérieure 140.

En référence à la [Fig.1B], pour réduire la distance de freinage d'un aéronef, notamment lors de l'atterrissage, il est connu de modifier l'orientation du flux d'air dans la veine secondaire 500 de manière à réaliser une phase d'inversion de poussée B. On distingue par la suite une phase de poussée A ([Fig.1A]) dans laquelle le flux d'air secondaire F2 circule d'amont en aval dans la veine secondaire 500 et une phase d'inversion de poussée B ([Fig.1B]) dans laquelle y circule un flux d'air inverse F-INV d'aval en amont. On précise que lors d'une phase d'inversion de poussée B, un flux d'air intérieur F-INT provenant du flux d'air amont F circule d'amont en aval au pied de la soufflante 300 pour alimenter le flux d'air primaire F1 de même qu'en phase de poussée A. Le flux d'air primaire F1 peut également être alimenté par une partie du flux d'air inverse F-INV qui contourne le carter 600.

Pour réaliser la phase d'inversion de poussée, il est connu par la demande de brevet FR2120172A1 d'obstruer au moins partiellement la veine secondaire 500, en aval de la soufflante 300, et de conjointement découvrir des grilles logées dans la nacelle 200 afin de former le flux d'air inverse F-INV orienté inversement au flux d'air secondaire F2. Un tel système d'inversion de poussée présente toutefois l'inconvénient de pénaliser la masse, l'encombrement et la traînée de l'ensemble propulsif d'aéronef 800, notamment pour une nacelle 200 de diamètre important utilisée dans les ensembles propulsifs d'aéronef à fort taux de dilution, à savoir dont le rapport de la masse du flux d'air secondaire F2 sur la masse du flux d'air primaire F1 est supérieur à 16, et notamment supérieur à 20.

En référence à la [Fig.1B], pour des ensembles propulsifs d'aéronef à fort taux de dilution, il est connu de prévoir une soufflante 300 à calage variable, connue sous sa dénomination anglaise « Variable Pitch Fan » d'abréviation « VPF », qui comprend des aubes dont l'angle de calage est piloté de manière à inverser le sens de circulation du flux d'air dans la veine secondaire 500. En pratique, lors d'une phase d'inversion de poussée B, le flux d'air inverse F-INV circule d'aval en amont dans la veine secondaire 500 puis traverse la soufflante 300 et est guidé vers l'amont par la paroi intérieure amont 110 de l'entrée d'air 100. Le flux d'air inverse F-INV s'oppose alors au flux d'air amont F, notamment de manière radialement extérieure à proximité de la nacelle 200, ce qui permet un freinage. Le flux d'air inverse F-INV rejoint ensuite le flux d'air extérieur F-EXT qui est admis par l'extrémité aval de la nacelle 200 dans la veine secondaire 500.

Dans les faits, il est observé que le flux d'air inverse F-INV reste attaché à l'enveloppe externe périphérique 110 de l'entrée d'air 100 lorsqu'il rejoint le flux d'air extérieur F-EXT, c'est-à-dire qu'il épouse le contour de l'entrée d'air 200 sans se décoller de l'enveloppe externe périphérique 110, un tel phénomène étant connu sous le terme « d'effet Coanda ». Un tel phénomène tend à accélérer le flux d'air inverse F-INV au niveau de l'entrée d'air 100 ce qui génère une dépression locale DP à l'origine d'un effort s'opposant à la phase d'inversion de poussée. Un tel phénomène est ainsi susceptible de réduire les performances de la turbomachine 700 en phase d'inversion de poussée, ce qui est indésirable.

Pour augmenter les performances de la turbomachine 700 lors d'une phase d'inversion de poussée, il est connu par les demandes de brevet FR1904087A1 et FR1904094A1 de monter de manière mobile respectivement des organes de déviation et des aubes de redresseur sur l'entrée d'air 100, qui sont déployés lors d'une phase d'inversion de poussée B et escamotés lors d'une phase de poussée A. Les demandes de brevet FR1904089A1 et FR1904096A1 enseignent alternativement de rendre respectivement mobile ou élastiquement déformable une portion de l'entrée d'air 100 lors de la phase d'inversion de poussée B. La demande de brevet FR1904092A1 enseigne quant à elle de former des conduites internes dans l'entrée d'air 100 qui sont ouvertes lors de la phase d'inversion de poussée B pour détourner une partie du flux d'air inverse F-INV. Toutes ces solutions permettent avantageusement de modifier le profil arrondi de l'entrée d'air uniquement lors d'une phase d'inversion de poussée B pour éviter la formation d'une dépression locale DP, sans réduire les performances en phase de poussée A. De telles solutions présentent toutefois l'inconvénient de nécessiter une entrée d'air d'architecture à double profil complexe, coûteuse et nécessitant d'être actionnée, ce qui la rend sujette à une éventuelle défaillance.

De manière incidente, pour améliorer la traînée lors d'une phase de poussée, il est connu par la demande US10399687B2 une entrée d'air comportant une ouverture traversante dont l'ouverture est contrôlée par un organe de couverture mobile. Une telle solution présente les mêmes inconvénients que précédemment.

L'invention vise ainsi une entrée d'air 100 de nacelle 200 d'ensemble propulsif d'aéronef 800 permettant de favoriser les performances de la turbomachine 700 à la fois lors d'une phase de poussée A et d'inversion de poussée B et présentant une architecture simple et robuste.

PRESENTATION DE L'INVENTION

L'invention concerne une entrée d'air de nacelle d'ensemble propulsif d'aéronef, ledit ensemble propulsif d'aéronef s'étendant selon un axe longitudinal orienté d'amont en aval et comprenant une turbomachine comprenant une veine primaire radialement intérieure et une veine secondaire radialement extérieure configurées pour guider d'amont en aval respectivement un flux d'air primaire et un flux d'air secondaire lors d'une phase de poussée, ladite turbomachine comprenant à l'amont une soufflante montée rotative autour de l'axe longitudinal, ledit ensemble propulsif d'aéronef comprenant des moyens d'inversion de poussée configurés pour modifier le flux d'air secondaire en un flux d'air inverse circulant d'aval en amont dans la veine secondaire lors d'une phase d'inversion de poussée, ladite nacelle s'étendant extérieurement autour de la turbomachine et comprenant à son extrémité amont l'entrée d'air, ladite entrée d'air comprenant une enveloppe externe périphérique d'axe longitudinal comprenant une paroi intérieure tournée vers l'axe longitudinal et une paroi extérieure opposée à la paroi intérieure qui sont reliées à l'amont par une lèvre d'entrée d'air comprenant un bord d'attaque pour favoriser la phase de poussée, ladite entrée d'air comportant un rayon intérieur au niveau de la soufflante dit « rayon de soufflante R3 », ladite enveloppe externe périphérique comportant une courbure variable dans un plan radial à l'axe longitudinal.

L'invention est remarquable ce que l'enveloppe externe périphérique de l'entrée d'air comporte, dans chaque plan radial, un point de courbure maximale de manière à décoller le flux d'air inverse de l'enveloppe externe périphérique afin de favoriser une phase d'inversion de poussée, un cercle osculateur comportant un rayon de courbure étant défini en chacun des points de courbure maximale, la valeur moyenne Rmoy des rayons de courbure à la périphérie de l'entrée d'air vérifiant la relation suivante : Rmoy < 0,028 * R3.

Par définition géométrique, le cercle osculateur en un point d'une courbe correspond au cercle tangent à la courbe en le point et qui y épouse la courbe le mieux possible. En considérant que l'enveloppe externe périphérique décrit une courbe dans chaque plan radial à l'axe longitudinal, dite par la suite « courbe d'entrée d'air », le cercle osculateur en un point de courbure maximale d'une courbe d'entrée d'air désigne le cercle tangent à ladite courbe d'entrée d'air en ledit point de courbure maximale et qui y épouse le mieux possible la courbe d'entrée d'air. Le rayon de courbure désigne quant à lui le rayon du cercle osculateur, à savoir le segment droit reliant son centre et sa circonférence.

On fournit également la définition mathématique du rayon de courbure R en un point de courbure maximale P d'une courbe d'entrée d'air défini par une équation paramétrique en coordonnées cartésiennes x(P), y(P) :

[Math 1]

$$R(P) = \frac{\left(\frac{dx}{dP}^2 + \frac{dy}{dP}^2\right)^{\frac{3}{2}}}{\frac{dx}{dP}\frac{d^2y}{dP^2} - \frac{dy}{dP}\frac{d^2x}{dP^2}} \cdot$$

Grâce à l'invention, l'entrée d'air comporte un profil inchangé qui permet de guider efficacement le flux d'air à la fois en phase de poussée et en phase d'inversion de poussée, ce qui favorise les performances de la turbomachine d'aéronef. Plus précisément, le profil de l'entrée d'air comporte d'une part une extrémité amont arrondie et d'autre part un ensemble de points de courbure maximale. L'extrémité amont arrondie permet avantageusement en phase de poussée de séparer le flux d'air amont en un flux d'air intérieur pour alimenter la turbomachine d'aéronef et un flux d'air extérieur. Les points de courbure maximale permettent quant à eux en phase d'inversion de poussée de décoller le flux d'air inverse de l'enveloppe externe périphérique.

Selon un premier aspect de l'invention, l'enveloppe externe périphérique de l'entrée d'air est exempte de partie mobile. Selon un autre aspect, indépendant du premier aspect, l'enveloppe externe périphérique est indéformable. Une telle entrée d'air de profil fixe et indéformable présente avantageusement une architecture simple, robuste, pérenne et économique.

Selon un aspect de l'invention, la valeur moyenne des rayons de courbure vérifie la relation suivante : Rmoy < 0,02 * R3, et de préférence la relation suivante : Rmoy < 0,01 * R3. Autrement dit, l'entrée d'air comprend au niveau des points de courbure maximale une courbure très prononcée, c'est-à-dire une faible épaisseur radiale, ce qui favorise le décollement du flux d'air inverse.

Selon un aspect préféré de l'invention, la valeur moyenne des rayons de courbure vérifie la relation suivante : Rmoy > 0,005 * R3. Ceci garantit une épaisseur radiale minimale à l'entrée d'air, pour conserver les performances en phase de poussée.

Selon un aspect de l'invention, les points de courbure maximale sont situés dans une portion amont de l'enveloppe externe périphérique qui comporte une longueur longitudinale L16 définie depuis le bord d'attaque de la lèvre d'entrée d'air et vérifiant la relation suivante : L16 < 6 * Rmoy, de préférence : L16 < 4 * Rmoy, et préférentiellement : L16 < 2 * Rmoy. Autrement dit, la longueur longitudinale est définie entre l'extrémité amont de l'entrée d'air, à savoir le bord d'attaque, et un point aval variable en fonction de la valeur moyenne des rayons de courbure. Ainsi, les points de courbure maximale sont concentrés au voisinage de la lèvre d'entrée d'air. Ceci permet avantageusement d'amorcer le décollement du flux d'air inverse au voisinage de la lèvre d'entrée d'air de manière à le décoller de la paroi extérieure, et ce afin d'y éviter toute formation d'une dépression locale néfaste à l'inversion de poussée.

Selon un aspect, les points de courbure maximale sont situés sur le bord d'attaque de la lèvre d'entrée d'air, point optimal d'amorçage du décollement du flux d'air inverse.

Selon un aspect de l'invention, les points de courbure maximale forment ensemble une courbe fermée, dite « courbe de décollement », de préférence appartenant à un plan transversal à l'axe longitudinal, préférentiellement en forme de cercle de centre traversé par l'axe longitudinal. Autrement dit, les points de courbure maximale s'étendent de manière continue les uns par rapport aux autres et appartiennent tous de préférence au même plan, pour un décollement global et homogène du flux d'air inverse sur tout le contour de l'enveloppe externe périphérique. Une courbe de décollement en forme de cercle correspond à une entrée d'air axisymétrique et permet un décollement parfaitement homogène.

De préférence, la valeur du rayon de courbure du cercle osculateur, défini en deux points de courbure maximale consécutifs de la courbe de décollement, varie d'au plus 10%, de préférence d'au plus 5%. Autrement dit, la lèvre d'entrée d'air comporte une épaisseur radiale qui varie progressivement sur sa circonférence, pour un décollement homogène du flux d'air inverse. Des zones de faible épaisseur et de forte épaisseur ne sont pas voisines.

Selon un aspect de l'invention, la valeur du rayon de courbure du cercle osculateur, défini en au moins 25% des points de courbure maximale, est sensiblement identique, de préférence pour au moins 50% des points de courbure maximale, et préférentiellement pour l'ensemble des points de courbure maximale. Autrement dit, la lèvre d'entrée d'air comporte une épaisseur radiale sensiblement constante sur sa circonférence, pour un décollement homogène du flux d'air inverse. On précise que l'expression « sensiblement identique » ou « sensiblement constante » employée ici et dans l'ensemble de la demande de brevet autorise un écart d'au plus 10%.

L'invention concerne également l'ensemble d'une entrée d'air et d'une soufflante de turbomachine d'ensemble propulsif d'aéronef montée rotative autour de l'axe longitudinal, ladite entrée d'air s'étendant extérieurement autour de la soufflante, ladite soufflante comportant une pluralité d'aubes à calage variable de manière à former les moyens d'inversion de poussée de l'ensemble propulsif d'aéronef. Ceci permet avantageusement de favoriser la phase d'inversion de poussée, notamment en évitant d'utiliser un système à grilles logé dans la nacelle qui ajoute de la masse et de l'encombrement.

De préférence, la soufflante comporte un taux de compression, défini comme le rapport de la pression en sortie de soufflante sur celle en entrée de soufflante, qui est inférieur à 1,4 de manière à optimiser le fonctionnement des turbomachines à fort taux de dilution.

De préférence, l'entrée d'air comporte une longueur L1, définie comme la distance longitudinale séparant le bord d'attaque de la lèvre d'entrée d'air et le bord amont des aubes de soufflante, qui vérifie la relation suivante : L1 < 0,8 * R3, et de préférence la relation suivante : L1 < 0,6 * R3, et préférentiellement la relation suivante : L1 < 0,4 * R3. Le décollement du flux d'air inverse de l'enveloppe externe périphérique est avantageusement plus aisé pour une entrée d'air courte.

L'invention concerne également une nacelle d'ensemble propulsif d'aéronef, ledit ensemble propulsif d'aéronef s'étendant selon un axe longitudinal orienté d'amont en aval et comprenant une turbomachine comprenant une veine primaire radialement intérieure et une veine secondaire radialement extérieure configurées pour guider d'amont en aval respectivement un flux d'air primaire et un flux d'air secondaire lors d'une phase de poussée, ladite turbomachine comprenant à l'amont une soufflante montée rotative autour de l'axe longitudinal, ledit ensemble propulsif d'aéronef comprenant des moyens d'inversion de poussée configurés pour modifier le flux d'air secondaire en un flux d'air inverse circulant d'aval en amont dans la veine secondaire lors d'une phase d'inversion de poussée, ladite nacelle s'étendant extérieurement autour de la turbomachine et comprenant à son extrémité amont une entrée d'air telle que décrite précédemment.

De préférence, la nacelle comporte un rayon extérieur maximal Rmax, défini comme la distance radiale maximale séparant son centre et sa paroi extérieure, qui vérifie la relation suivante : Rmax < 1,2 * R3 , et de préférence la relation suivante : Rmax < 1,15 * R3, et préférentiellement la relation suivante : Rmax < 1,1 * R3. Autrement dit, une telle nacelle comporte une faible épaisseur radiale ce qui permet de favoriser le décollement du flux d'air inverse de l'enveloppe externe périphérique.

De préférence, la nacelle comporte une longueur L2, définie comme la longueur de l'enveloppe externe périphérique de la nacelle, qui vérifie la relation suivante : L2 < 3 * R3, et de préférence la relation suivante : L2 < 2,5 * R3, et préférentiellement la relation suivante : L2 < 2* R3. Une nacelle de longueur réduite peut avantageusement être pourvue d'une entrée d'air courte et comporter une faible épaisseur radiale.

L'invention concerne en outre un ensemble propulsif d'aéronef s'étendant selon un axe longitudinal orienté d'amont en aval et comprenant une turbomachine et une nacelle, ladite turbomachine comprenant une veine primaire radialement intérieure et une veine secondaire radialement extérieure configurées pour guider d'amont en aval respectivement un flux d'air primaire et un flux d'air secondaire lors d'une phase de poussée, ladite turbomachine comprenant à l'amont une soufflante montée rotative autour de l'axe longitudinal, ledit ensemble propulsif d'aéronef comprenant des moyens d'inversion de poussée configurés pour modifier le flux d'air secondaire en un flux d'air inverse circulant d'aval en amont dans la veine secondaire lors d'une phase d'inversion de poussée, ladite nacelle s'étendant extérieurement autour de la turbomachine et comprenant à son extrémité amont une entrée d'air telle que décrite précédemment, l'ensemble propulsif d'aéronef comportant de préférence un taux de dilution supérieur à 20. On précise que le taux de dilution se définit comme le rapport de la masse du flux d'air secondaire sur la masse du flux d'air primaire. Un tel ensemble propulsif à très fort taux de dilution permet avantageusement d'augmenter le rendement propulsif et donc d'augmenter les performances de la turbomachine d'aéronef en phase de poussée.

L'invention concerne par ailleurs un procédé d'utilisation d'une entrée d'air de nacelle d'ensemble propulsif d'aéronef telle que décrite précédemment, dans lequel :

- lors d'une phase de poussée, la lèvre d'entrée d'air sépare un flux d'air amont circulant d'amont en aval en un flux d'air extérieur guidé par la paroi extérieure et un flux d'air intérieur guidé par la paroi intérieure, et
- lors d'une phase d'inversion de poussée, les points de courbure maximale décollent de l'enveloppe externe périphérique un flux d'air inverse circulant d'aval en amont dans l'entrée d'air pour rejoindre le flux d'air extérieur, de manière à favoriser la phase d'inversion de poussée.

Un tel procédé est avantageusement exempt d'étape de déplacement et/ou de déformation de l'entrée d'air, celle-ci conservant sa forme lors d'une phase d'inversion de poussée, ce qui lui offre une architecture simple, robuste, pérenne et économique. Le procédé est par ailleurs simple et rapide à mettre en œuvre, sans temps de latence pour passer d'une phase à l'autre.

L'invention concerne par ailleurs un procédé d'utilisation d'un ensemble propulsif d'aéronef tel que décrit précédemment, dans lequel :

- lors d'une phase de poussée, la lèvre d'entrée d'air sépare un flux d'air amont circulant d'amont en aval en un flux d'air extérieur guidé par la paroi extérieure et un flux d'air intérieur guidé par la paroi intérieure, et
- lors d'une phase d'inversion de poussée, les moyens d'inversion de poussée sont activés et les points de courbure maximale décollent de l'enveloppe externe périphérique un flux d'air inverse circulant d'aval en amont dans l'entrée d'air pour rejoindre le flux d'air extérieur, de manière à favoriser la phase d'inversion de poussée.

De préférence, lors d'une phase d'inversion de poussée, le calage des aubes de la soufflante est modifié pour former le flux d'air inverse.

## PRESENTATION DES FIGURES

L'invention sera mieux comprise à la lecture de la description qui va suivre, donnée à titre d'exemple, et se référant aux figures suivantes, données à titre d'exemples non limitatifs, dans lesquelles des références identiques sont données à des objets semblables.

[Fig.1A] La [Fig.1A] est une représentation en demi-coupe longitudinale d'un ensemble propulsif d'aéronef selon l'art antérieur lors d'une phase de poussée ;
[Fig.1B] La [Fig.1B] est une représentation en demi-coupe longitudinale de l'ensemble propulsif d'aéronef de la [Fig.1A] lors d'une phase d'inversion de poussée ;
[Fig.2A] La [Fig.2A] est une représentation en demi-coupe longitudinale d'un ensemble propulsif d'aéronef selon une forme de réalisation de l'invention lors d'une phase de poussée ;
[Fig.2B] La [Fig.2B] est une représentation en demi-coupe longitudinale de l'ensemble propulsif d'aéronef de la [Fig.2A] lors d'une phase d'inversion de poussée ;

[Fig.3] La [Fig.3] est une représentation en demi-coupe longitudinale de l'ensemble propulsif d'aéronef de la [Fig.2A] ;

[Fig.4] La [Fig.4] est une représentation en demi-coupe radiale de l'entrée d'air de l'ensemble propulsif de la [Fig.2A] ;

[Fig.5] La [Fig.5] est une représentation en perspective de l'entrée d'air de la [Fig.4] ;

[Fig.6] La [Fig.6] est une représentation en coupe transversale de l'entrée d'air de la [Fig.4] ;

[Fig.7] La [Fig.7] est une représentation en demi-coupe radiale d'une entrée d'air d'ensemble propulsif d'aéronef selon une forme de réalisation alternative de l'invention ;

[Fig.8] La [Fig.8] est une représentation en perspective de l'entrée d'air de la [Fig.7] ;

[Fig.9] La [Fig.9] est une représentation en perspective d'une entrée d'air d'ensemble propulsif d'aéronef selon une forme de réalisation alternative de l'invention ; et

[Fig. 10] La [Fig.10] est une représentation en coupe transversale d'une entrée d'air d'ensemble propulsif d'aéronef selon une autre forme de réalisation alternative de l'invention.

Il faut noter que les figures exposent l'invention de manière détaillée pour mettre en œuvre l'invention, lesdites figures pouvant bien entendu servir à mieux définir l'invention le cas échéant.

## DESCRIPTION DETAILLEE DE L'INVENTION

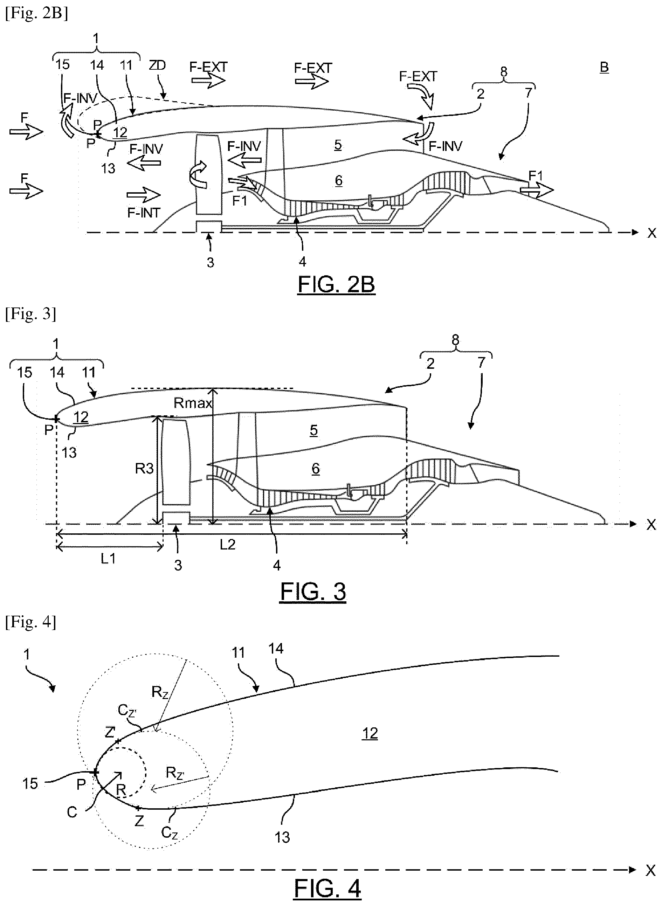

En référence aux figures 2A et 2B, l'invention concerne un ensemble propulsif d'aéronef 8 de profil aérodynamique innovant, notamment au niveau de l'entrée d'air 1, pour favoriser les performances à la fois lors d'une phase de poussée A et lors d'une phase d'inversion de poussée B.

Comme illustré sur la [Fig.2A] et décrit dans le préambule, l'ensemble propulsif d'aéronef 8 s'étend selon un axe longitudinal X orienté d'amont en aval et comprend une turbomachine 7 et une nacelle 2. La turbomachine 7 s'étend selon l'axe longitudinal X et est configurée pour permettre la propulsion de l'aéronef à partir de l'accélération d'un flux d'air intérieur F-INT circulant d'amont en aval dans la turbomachine 7. La nacelle 2 s'étend quant à elle extérieurement autour de la turbomachine 7 selon l'axe longitudinal X et permet de guider le flux d'air intérieur F-INT dans la turbomachine 7. Par la suite, les termes « amont » et « aval » sont définis par rapport à l'orientation de l'axe longitudinal X. Les termes « intérieur » et « extérieur » sont quant à eux définis selon la direction radiale par rapport à l'axe longitudinal X.

Comme illustré sur la [Fig.2A] et décrit dans le préambule, la turbomachine 7 est de type à double flux et comprend à l'amont une soufflante 3 montée rotative autour de l'axe longitudinal X pour accélérer le flux d'air intérieur F-INT d'amont en aval. La turbomachine 7 comprend également, en aval de la soufflante 3, une veine primaire 4, radialement intérieure, et une veine secondaire 5, radialement extérieure, qui sont séparées par un carter 6. Le carter 6 est configuré pour guider une première partie du flux d'air intérieur F-INT, dite flux d'air primaire F1, dans la veine primaire 4 pour la combustion du carburant et une deuxième partie du flux d'air intérieur F-INT, dite flux d'air secondaire F2, dans la veine secondaire 5 afin de générer la poussée de la turbomachine 7.

Toujours en référence à la [Fig.2A] et comme décrit dans le préambule, la nacelle 2 s'étend de manière radialement extérieure à la soufflante 3 et délimite de manière radialement extérieure la veine secondaire 5. La nacelle 2 comprend à son extrémité amont une entrée d'air 1 comprenant une enveloppe externe périphérique 11 délimitant une cavité interne annulaire 12. L'enveloppe externe périphérique 11 comprend une paroi intérieure 13 tournée vers l'axe longitudinal X et une paroi extérieure 14 opposée à la paroi intérieure 13, reliées ensemble à l'amont par une lèvre d'entrée d'air 15 comprenant un bord d'attaque. L'entrée d'air 1 possède un profil arrondi aérodynamique qui permet de séparer un flux d'air amont F en le flux d'air intérieur F-INT guidé par la paroi intérieure 13 et un flux d'air extérieur F-EXT guidé par la paroi extérieure 14.

En référence à la [Fig.2B] et comme décrit dans le préambule, la soufflante 3 est de type à calage variable, connue sous sa dénomination anglaise « Variable Pitch Fan » d'abréviation « VPF », c'est-à-dire qu'elle comprend des aubes dont l'angle de calage est piloté de manière à inverser le sens de circulation du flux d'air dans la veine secondaire 5. On distingue par la suite une phase de poussée A ([Fig.2A]) dans laquelle le flux d'air secondaire F2 circule d'amont en aval dans la veine secondaire 5 et une phase d'inversion de poussée B ([Fig.2B]) dans laquelle y circule un flux d'air inverse F-INV d'aval en amont pour réduire la distance de freinage d'un aéronef, notamment lors de l'atterrissage. En pratique, lors d'une phase d'inversion de poussée B, le flux d'air inverse F-INV circule d'aval en amont dans la veine secondaire 5 puis traverse la soufflante 3 et est guidé vers l'amont par la paroi intérieure amont 11 de l'entrée d'air 1. Le flux d'air inverse F-INV s'oppose alors au flux d'air amont F, notamment de manière radialement extérieure à proximité de la nacelle 2, ce qui permet un freinage. Le flux d'air inverse F-INV rejoint ensuite le flux d'air extérieur F-EXT qui est admis par l'extrémité aval de la nacelle 2 dans la veine secondaire 5. On précise que lors d'une phase d'inversion de poussée B, un flux d'air intérieur F-INT provenant du flux d'air amont F circule d'amont en aval au pied de la soufflante 3 pour alimenter le flux d'air primaire F1 de même qu'en phase de poussée A. Le flux d'air primaire F1 peut également être alimenté par une partie du flux d'air inverse F-INV qui contourne le carter 6.

D'autres systèmes d'inversion de poussée pourraient être utilisés alternativement à la soufflante à calage variable 3. Il pourrait notamment être prévu d'obstruer au moins partiellement la veine secondaire 5 en aval de la soufflante 3, et de conjointement découvrir des grilles logées dans la nacelle 2 afin de former le flux d'air inverse F-INV. Un inverseur à grilles ou à volets pourrait être notamment utilisé.

Pour favoriser les performances de l'ensemble propulsif d'aéronef 8 à la fois en phase de poussée A et d'inversion de poussée B, selon l'invention et en référence aux figures 2A et 2B, l'enveloppe externe périphérique 11 de l'entrée d'air 1 comporte une courbure adaptée :

- lors d'une phase de poussée A ([Fig.2A]), pour séparer le flux d'air amont F en le flux d'air intérieur F-INT et le flux d'air extérieur F-EXT, et
- lors d'une phase d'inversion de poussée B ([Fig.2B]), pour décoller le flux d'air inverse F-INV de l'enveloppe externe périphérique 11 lorsqu'il rejoint le flux d'air extérieur F-EXT.

Autrement dit, lors d'une phase d'inversion de poussée B, l'enveloppe externe périphérique 11 est configurée pour générer une zone de décollement ZD ([Fig.2B]) au niveau de la paroi extérieure 14 où le flux d'air inverse F-INV, au lieu de s'écouler d'amont en aval en suivant le contour de la paroi extérieure 14, comporte une vitesse nulle voire opposée et forme des tourbillons. Le flux d'air inverse F-INV s'écoule normalement au-delà de la zone de décollement ZD pour rejoindre le flux d'air extérieur F-EXT. Une telle entrée d'air 1 permet avantageusement d'éviter l'apparition de l'effet Coanda, caractérisé par une accélération locale du flux d'air inverse F-INV qui reste attaché au niveau de la paroi extérieure 14, ce qui génère une dépression locale DP à l'origine d'un effort indésirable opposé à l'inversion de poussée B. L'entrée d'air 1 est en outre de préférence exempte de partie mobile et indéformable, ce qui la rend pérenne et économique par comparaison à une entrée d'air comportant des parties mobiles ou une enveloppe déformable.

En référence à la [Fig.3], outre la courbure de l'enveloppe externe périphérique 11 de l'entrée d'air 1, l'invention présente également d'autres critères géométriques à respecter pour l'ensemble propulsif d'aéronef 8 afin de favoriser ses performances dans les deux phases A, B. Le premier critère repose sur le taux de dilution de la turbomachine 7 qui est de préférence supérieur à 16, préférentiellement supérieure à 20. On précise en référence à la [Fig.2A] que le taux de dilution correspond au rapport de la masse de flux secondaire F2 sur la masse de flux primaire F1 et est généralement compris entre 3 et 12 pour des turbomachines à double flux 7. Autrement dit, la turbomachine 7 est à très fort taux de dilution et génère une majeure partie de sa poussée, grâce à l'accélération du flux d'air secondaire F2, en pratique plus de 80%. Un fort taux de dilution permet également de générer un flux d'air inverse F-INV important. On précise qu'une telle turbomachine 7 à très fort taux de dilution est de préférence associée à une soufflante à calage variable 3 plus efficace et ne pénalisant pas la masse et l'encombrement de l'aéronef.

En référence à la [Fig.3], le deuxième critère concerne le taux de compression de la soufflante 3 qui est de préférence inférieur à 1,4. On précise que le taux de compression se définit comme le rapport de la pression en sortie de soufflante 3 sur celle en entrée de soufflante 3. Les critères indépendants suivants concernent la nacelle 2 dont :

- la longueur L2 définie comme la longueur de l'enveloppe externe périphérique 11 de la nacelle 2 selon l'axe longitudinal X vérifie de préférence : $L2 < 3 * R3$, où R3 désigne ici et pour la suite le rayon intérieur de l'entrée d'air 1 au niveau de soufflante 3, dit « rayon de soufflante ». De préférence même, la longueur L2 vérifie : $L2 < 2,5 * R3$ et préférentiellement : $L2 < 2 * R3$.
- la longueur L1 de l'entrée d'air 1 définie entre le bord d'attaque de la lèvre d'entrée d'air 15 et le bord amont de la soufflante 3 vérifie de préférence : $L1 < 0,8 * R3$. De préférence même, la longueur L1 vérifie : $L1 < 0,6 * R3$ et préférentiellement : $L1 < 0,4 * R3$.
- le rayon extérieur maximal Rmax de la nacelle 2 vérifie de préférence : $Rmax < 1,2 * R3$. De préférence même, le rayon extérieur maximal Rmax vérifie : $Rmax < 1,15 * R3$ et préférentiellement : $Rmax < 1,1 * R3$.

Autrement dit, ces critères imposent une nacelle 2 et une entrée d'air 1 de fine épaisseur radiale, ce qui favorise le décollement du flux d'air inverse F-INV lors d'une phase d'inversion de poussée B. L'ensemble des critères exposés sont de préférence respectés pour des performances optimales.

On qualifie par la suite plus précisément la courbure de l'enveloppe externe périphérique 11 de l'entrée d'air 1.

Selon l'invention, en référence aux figures 2A, 2B et 3, l'enveloppe externe périphérique 11 décrit, dans chaque plan radial à l'axe longitudinal X, une courbe dite par la suite « courbe d'entrée d'air » qui comporte une courbure variable et notamment un point de courbure maximale P, à savoir un point où la courbure est la plus prononcée. Toujours selon l'invention, chaque point de courbure maximale P est caractérisé par un rayon de courbure, dont la valeur moyenne Rmoy pour l'ensemble des points de courbure maximale P vérifie : $Rmoy < 0,028 * R3$, avec R3 le rayon de soufflante. On précise que le rayon de courbure d'un point d'une courbe correspond au rayon du cercle osculateur en ledit point de la courbe, à savoir le rayon du cercle tangent à la courbe en ledit point qui y épouse la courbe le mieux possible.

Dans l'exemple de la [Fig.4] représentant l'entrée d'air 1 en demi-coupe radiale, un point de courbure maximale P d'une courbe d'entrée d'air est représenté, ainsi que son cercle osculateur C de rayon de courbure R. Deux autres points Z, Z' de la courbe d'entrée d'air ainsi que leur cercle osculateur $C_Z$, $C_Z$, de rayons de courbure $R_Z$, $R_{Z'}$ sont également représentés. Comme illustré sur la [Fig.4], le point de courbure maximale P correspond au point de la courbe d'entrée d'air comportant le plus petit rayon de courbure R, en particulier inférieur aux rayons de courbure $R_Z$, $R_{Z'}$ des points Z, Z'.

De tels points de courbure maximale P forment avantageusement des points de décollement du flux d'air inverse F-INV guidé d'aval en amont par la paroi intérieure 13, de par leur faible rayon de courbure qui tend à détacher le flux d'air inverse F-INV de l'enveloppe externe périphérique 11. Ainsi, la lèvre d'entrée d'air 15 et les points de courbure maximale P permettent respectivement de favoriser une phase de poussée A et une phase d'inversion de poussée B. En effet, la lèvre d'entrée d'air 15 favorise la séparation du flux d'air amont F en le flux d'air intérieur F-INT et le flux d'air extérieur F-EXT grâce à son profil arrondi tandis que les points de courbure maximale P favorisent le décollement du flux d'air inverse F-INV.

Dans l'exemple de la [Fig.4], le point de courbure maximale P est situé au niveau de l'extrémité amont de l'entrée d'air 1, confondu avec le bord d'attaque de la lèvre d'entrée d'air 15. De manière avantageuse, un tel point courbure maximale P permet de générer une zone de décollement ZD ([Fig.2B]) localisée au niveau de l'extrémité amont de l'entrée d'air 1 et de la paroi extérieure 14, là où l'effet Coanda est susceptible d'apparaître. Il va cependant de soi que le point de courbure maximale P pourrait être localisé ailleurs sur l'enveloppe externe conique 11, comme ce sera vu par la suite. En pratique, peu importe la localisation du point de courbure maximale P, l'enveloppe externe périphérique 11 comporte un profil hybride compatible à la fois avec une phase de poussée A et d'inversion de poussée B. En pratique, ceci se traduit par un rayon de courbure moyen Rmoy suffisamment grand pour la phase de poussée A, de préférence vérifiant : Rmoy > 0,005 * R3 et suffisamment petit pour la phase d'inversion de poussée B, de préférence vérifiant : Rmoy < 0,02 * R3, et préférentiellement : Rmoy < 0,01 * R3. De manière préférée, chaque rayon de courbure R est supérieur à 0,005 * R3, et de préférence, inférieur à 0,05 * R3. De préférence encore, chaque rayon de courbure est inférieur à 0,02 * R3, préférentiellement à 0,01 * R3.

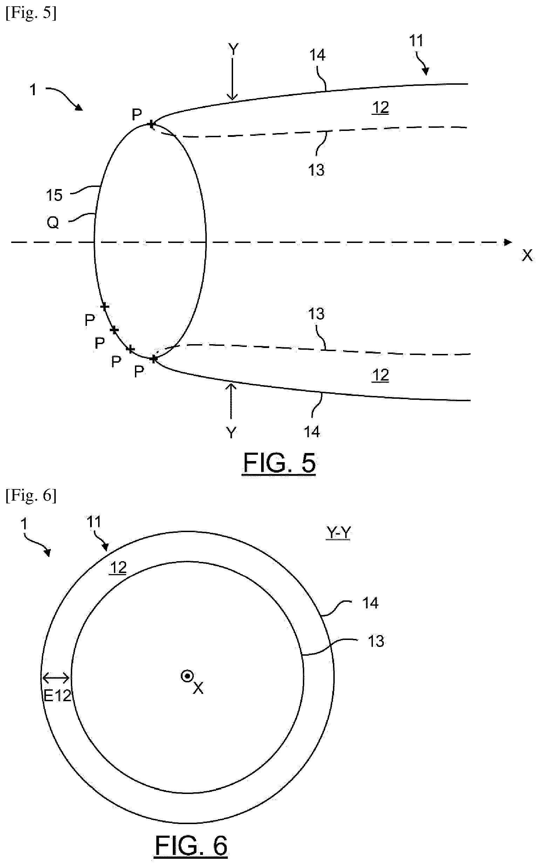

En référence à la [Fig.5] illustrant l'entrée d'air 1 de la [Fig.4] en perspective, l'ensemble des points de courbure maximale P sont situés sur le bord d'attaque de la lèvre d'entrée d'air 15 et délimitent ensemble une courbe fermée, dite « courbe de décollement Q ». Dans cet exemple, l'entrée d'air 1 étant axisymétrique, la courbe de décollement Q se présente sous la forme d'un cercle de centre traversé par l'axe longitudinal X et s'étendant dans un plan transversal à l'axe longitudinal X. Un tel positionnement des points de courbure maximale P, à savoir s'étendant de manière continue et tous localisés dans un même plan transversal à l'axe longitudinal X, permet avantageusement un décollement global et homogène du flux d'air inverse F-INV sur toute la circonférence de l'entrée d'air 1. Il va de soi que les points de courbure maximale P pourraient être positionnés différemment les uns des autres comme ce sera vu par la suite.

En référence à la [Fig.6] illustrant l'entrée d'air 1 de la [Fig.4] dans un plan transversal Y-Y ([Fig.5]) à l'axe longitudinal X, l'ensemble des points de courbure maximale P comportent un rayon de courbure R identique. Autrement dit, le rayon de courbure R de chaque point de courbure maximale P est égal au rayon de courbure moyen Rmoy. Ceci se traduit en pratique par une cavité interne annulaire 12 qui comporte, dans le plan transversal Y-Y, une épaisseur radiale E12 constante sur toute la circonférence de l'entrée d'air 1. Ceci permet avantageusement un décollement homogène sur toute la circonférence de l'entrée d'air 1. Il va de soi que le rayon de courbure R pourrait varier d'un point de courbure maximale P à un autre, comme ce sera vu par la suite.

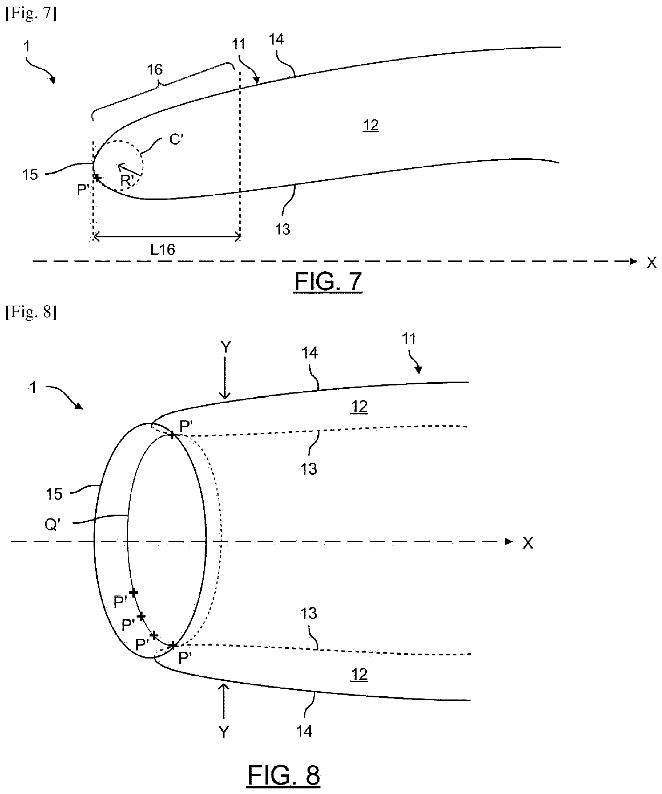

La [Fig.7] illustre une forme de réalisation alternative de l'invention avec un point de courbure maximale P' distinct du bord d'attaque de la lèvre d'entrée d'air 15, à savoir dans cet exemple localisé sur la paroi intérieure 13 proche de la lèvre d'entrée d'air 15. Un point de courbure maximale P' situé sur la paroi intérieure 13 permet de décoller le flux d'air inverse F-INV de manière anticipée avant la lèvre d'entrée d'air 15. Alternativement, le point de courbure maximale P' pourrait également être localisé sur la paroi extérieure 14, pour un décollement du flux d'air inverse F-INV plus tardif. En pratique, pour chaque courbe d'entrée d'air, le point de courbure maximale P' est de préférence localisé dans une portion amont 16 de l'enveloppe externe périphérique 11 s'étendant sur une longueur longitudinale L16 depuis le bord d'attaque de la lèvre d'entrée d'air 15 selon l'axe longitudinal X qui vérifie : L16 < 6 * Rmoy. De préférence, la portion amont 16 est réduite et vérifie : L16 < 4 * Rmoy, et préférentiellement : L16 < 2 * Rmoy. Autrement dit, les points de courbure maximale P' sont de préférence situés au voisinage de la lèvre d'entrée d'air 15 pour générer une zone de décollement ZD au contact de la lèvre d'entrée d'air 15 et éviter tout apparition de l'effet Coanda.

Dans l'exemple de la [Fig.8], l'ensemble des points de courbure maximale P' sont localisés comme dans l'exemple de la [Fig.7] sur la paroi intérieure 13 et appartiennent à un même plan transversal à l'axe longitudinal X. De tels points de courbure maximale P' décrivent une courbe de décollement Q' s'étendant dans un plan transversal à l'axe longitudinal X situé en aval de la lèvre d'entrée d'air 15, dans cet exemple en forme de cercle de diamètre inférieur à celui de la lèvre d'entrée d'air 15, et donc de la courbe de décollement Q de la [Fig.6]. De telles courbes de décollement Q, Q' permettent un décollement homogène du flux d'air inverse sur toute la circonférence de l'entrée d'air 1.

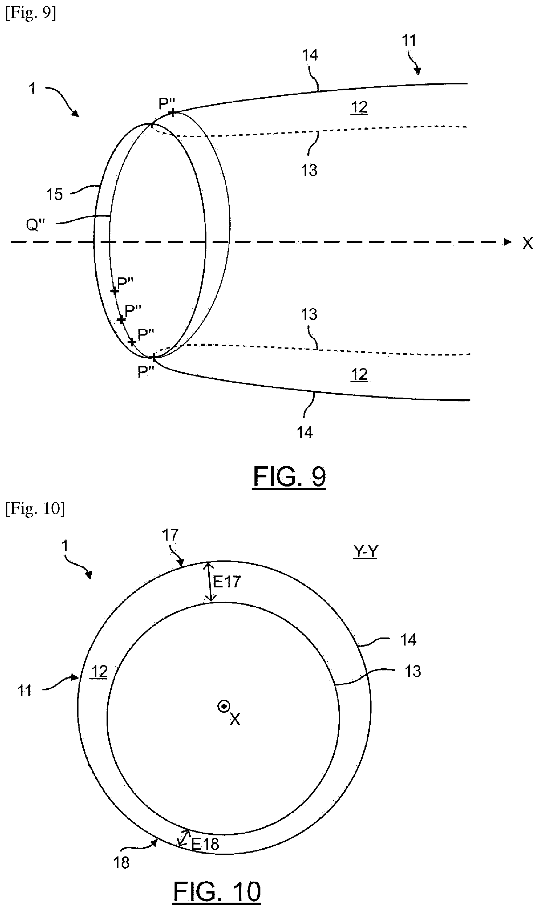

En référence à la [Fig.9], pour une entrée d'air 1 non axisymétrique ou pour favoriser la phase de poussée A à titre d'exemples, il peut être prévu des points de courbure maximale P" positionnés différemment les uns par rapport aux autres sur leur courbe d'entrée d'air. Dans cet exemple, certains points de courbure maximale P" sont ainsi situés sur la lèvre d'entrée d'air 15 tandis que d'autres s'étendent sur la paroi extérieure 14. De préférence, les points de courbure maximale P" s'étendent de manière continue les uns par rapport aux autres de manière à former une courbe de décollement Q" s'étendant dans un plan non transversal à l'axe longitudinal X.

Dans la forme de réalisation illustrée sur la [Fig.10], les points de courbure maximale P, P', P" de l'enveloppe externe périphérique 11 de l'entrée d'air 1 comportent différents rayons de courbure R, R' de sorte que l'épaisseur radiale de la cavité annulaire 12 varie dans le plan transversal Y-Y ([Fig.5]). Dans cet exemple, la cavité annulaire 12 comporte une portion 17 de plus grande épaisseur E17 et une portion 18 de plus faible épaisseur E18. Une variation de l'épaisseur radiale de la cavité annulaire 12 permet avantageusement de favoriser la phase de poussée A dans les zones de grande épaisseur et la phase d'inversion de poussée B dans les zones de faible épaisseur. En pratique, pour préserver l'aérodynamisme de l'entrée d'air 1, l'épaisseur radiale de la cavité annulaire 12 et donc le rayon de courbure R, R' des points de courbure maximale P, P', P" varie progressivement et faiblement. Dans l'exemple de la [Fig.10], l'épaisseur radiale de la cavité annulaire 12 varie progressivement de la portion 17 de plus grande épaisseur E17 à la portion 18 de plus faible épaisseur E18. De préférence, le rayon de courbure R, R' varie d'au plus 10%, préférentiellement d'au plus 5%, d'un point de courbure maximal P, P', P" à son voisin. Toujours de préférence, le rayon de courbure R, R' d'au moins 25% des points de courbure maximale P, P', P" est sensiblement identique, de préférence d'au moins 50% des points de courbure maximale P, P', P", et préférentiellement de l'ensemble des points de courbure maximale P, P', P".

Pour résumer, l'ensemble propulsif d'aéronef 8 de l'invention comporte une entrée d'air 1 comportant une architecture robuste et économique, exempte de partie mobile et indéformable, qui favorise à la fois une phase de poussée A et d'inversion de poussée B. Plus précisément, l'enveloppe externe périphérique 11 comporte une lèvre d'entrée d'air 15 pour séparer efficacement le flux d'air amont F en poussée A, mais également un ensemble de points de courbure maximale P, P', P" favorisant le décollement du flux d'air inverse F-INV au voisinage de la lèvre d'entrée d'air 15 lors d'une inversion de poussée B. Pour favoriser les performances de l'ensemble propulsif d'aéronef 8, celui-ci comporte de plus notamment une soufflante à calage variable 3, une turbomachine 7 à très haut taux de dilution et une nacelle 2 de longueur et d'épaisseur radiale réduites.

On décrit par la suite un procédé d'utilisation de l'ensemble propulsif d'aéronef 8 selon l'invention lors d'une phase de poussée A et lors d'une phase d'inversion de poussée B.

En référence à la [Fig.2A], lors d'une phase de poussée A, lors d'un décollage ou de conditions de croisière à titre d'exemples, les aubes de la soufflante à calage variable 3 sont orientées de manière à laisser circuler le flux d'air d'amont en aval. La lèvre d'entrée d'air 15 sépare le flux d'air amont F en un flux d'air extérieur F-EXT guidé par la paroi extérieure 14 et un flux d'air intérieur F-INT guidé par la paroi intérieure 13 vers la turbomachine 7 pour assurer sa poussée.

En référence à la [Fig.2B], lors d'une phase d'inversion de poussée B, lors d'un freinage ou d'un atterrissage à titre d'exemples, le calage des aubes de la soufflante 3 est modifié pour inverser le sens du flux d'air secondaire F2 dans la veine secondaire 5. Un flux d'air inverse F-INV circule ainsi d'aval en amont, traverse la soufflante 3, est guidé par la paroi intérieure 13 jusqu'à se décoller de celle-ci au niveau des points de courbure maximale P, P', P". Une zone de décollement ZD se forme alors au contact de la lèvre d'entrée d'air 15 ce qui évite toute dépression locale néfaste à l'inversion de poussée B.

Le passage d'une phase de poussée A à une phase d'inversion de poussée B est avantageusement simple et rapide à réaliser, ne nécessitant que de modifier l'orientation des aubes de la soufflante 3. Aucune étape de déplacement ou de déformation de l'entrée d'air 1 n'est nécessaire comme dans l'art antérieur. Le profil de l'entrée d'air 1 reste inchangé entre la phase de poussée A et la phase d'inversion de poussée B.

**Revendications**

1. Ensemble d'une entrée d'air (1) de nacelle (2) et d'une soufflante (3) de turbomachine (7) d'ensemble propulsif d'aéronef (8), ledit ensemble propulsif d'aéronef (8) s'étendant selon un axe longitudinal (X) orienté d'amont en aval et comprenant une turbomachine (7) comprenant une veine primaire (4) radialement intérieure et une veine secondaire (5) radialement extérieure configurées pour guider d'amont en aval respectivement un flux d'air primaire (F1) et un flux d'air secondaire (F2) lors d'une phase de poussée (A), la soufflante (3) étant configurée pour être montée à l'amont de la turbomachine (7), la soufflante (3) étant montée rotative autour de l'axe longitudinal (X), ledit ensemble propulsif d'aéronef (8) comprenant des moyens d'inversion de poussée configurés pour modifier le flux d'air secondaire (F2) en un flux d'air inverse (F-INV) circulant d'aval en amont dans la veine secondaire (5) lors d'une phase d'inversion de poussée (B), ladite soufflante (3) comportant une pluralité d'aubes à calage variable de manière à former les moyens d'inversion de poussée de l'ensemble propulsif d'aéronef (8), ladite nacelle (2) étant configurée pour s'étendre extérieurement autour de la turbomachine (7), l'entrée d'air (1) étant configurée pour s'étendre à l'extrémité amont de la nacelle (2), ladite entrée d'air (1) s'étendant extérieurement autour de la soufflante (3), ladite entrée d'air (1) comprenant une enveloppe externe périphérique (11) d'axe longitudinal (X) comprenant une paroi intérieure (13) tournée vers l'axe longitudinal (X) et une paroi extérieure (14) opposée à la paroi intérieure (13) qui sont reliées à l'amont par une lèvre d'entrée d'air (15) comprenant un bord d'attaque pour favoriser la phase de poussée (A), ladite entrée d'air (1) comportant un rayon intérieur au niveau de la soufflante (3) dit « rayon de soufflante (R3) », ladite enveloppe externe périphérique (11) comportant une courbure variable dans un plan radial à l'axe longitudinal (X), ensemble **caractérisé par le fait que** :

• l'entrée d'air (1) comporte un profil fixe et indéformable, de manière à rester inchangé entre la phase de poussée (A) et la phase d'inversion de poussée (B),
• l'enveloppe externe périphérique (11) comporte, dans chaque plan radial, un point de courbure maximale (P, P', P") de manière à décoller le flux d'air inverse (F-INV) de l'enveloppe externe périphérique (11) afin de favoriser une phase d'inversion de poussée (B), un cercle osculateur (C, C') comportant un rayon de courbure (R, R') étant défini en chacun des points de courbure maximale (P, P', P"), la valeur moyenne (Rmoy) des rayons de courbure (R, R') à la périphérie de l'entrée d'air (1) vérifiant la relation suivante : $Rmoy < 0,028 * R3$.

2. Ensemble selon la revendication 1, dans lequel la valeur moyenne (Rmoy) des rayons de courbure (R, R') vérifie la relation suivante : $Rmoy < 0,02 * R3$, et de préférence la relation suivante : $Rmoy < 0,01 * R3$.

3. Ensemble selon l'une des revendications 1 et 2, dans lequel les points de courbure maximale (P, P', P") de l'entrée d'air (1) sont situés dans une portion amont (16) de l'enveloppe externe périphérique (11) qui comporte une longueur longitudinale (L16) définie depuis le bord d'attaque de la lèvre d'entrée d'air (15) et vérifiant la relation suivante : $L16 < 6 * Rmoy$, de préférence : $L16 < 4 * Rmoy$, et préférentiellement : $L16 < 2 * Rmoy$.

4. Ensemble selon l'une des revendications 1 à 3, dans lequel les points de courbure maximale (P, P', P") sont situés sur le bord d'attaque de la lèvre d'entrée d'air (15).

5. Ensemble selon l'une des revendications 1 à 4, dans lequel les points de courbure maximale (P, P', P") de l'entrée d'air (1) forment ensemble une courbe fermée, dite « courbe de décollement (Q, Q', Q") », de préférence appartenant à un plan transversal à l'axe longitudinal (X), préférentiellement en forme de cercle de centre traversé par l'axe longitudinal (X).

6. Ensemble selon l'une des revendications 1 à 5, dans lequel la valeur du rayon de courbure (R, R') du cercle osculateur (C, C') défini en au moins 25% des points de courbure maximale (P, P', P") est sensiblement identique, de préférence pour au moins 50% des points de courbure maximale (P, P', P"), et préférentiellement pour l'ensemble des points de courbure maximale (P, P', P").

7. Ensemble propulsif d'aéronef (8) s'étendant selon un axe longitudinal (X) orienté d'amont en aval et comprenant une turbomachine (7) et une nacelle (2), ladite turbomachine (7) comprenant une veine primaire (4) radialement intérieure et une veine secondaire (5) radialement extérieure configurées pour guider d'amont en aval respectivement un flux d'air primaire (F1) et un flux d'air secondaire (F2) lors d'une phase de poussée (A), ledit ensemble propulsif d'aéronef (8) comprenant un ensemble d'une entrée d'air (1) et d'une soufflante (3) selon l'une des revendications 1 à 6, ladite turbomachine (7) comprenant à l'amont la soufflante (3) montée rotative autour de l'axe longitudinal (X), ledit ensemble propulsif d'aéronef (8) comprenant des moyens d'inversion de poussée formés par la soufflante (3) et configurés pour modifier le flux d'air secondaire (F2) en un flux d'air inverse (F-INV) circulant d'aval en amont dans la veine secondaire (5) lors d'une phase d'inversion de poussée (B), ladite nacelle (2) s'étendant extérieurement autour de la turbomachine (7) et comprenant à son extrémité amont l'entrée d'air (1), l'ensemble propulsif d'aéronef (8) comportant de préférence un taux de dilution supérieur à 20.

8. Procédé d'utilisation d'un ensemble d'une entrée d'air (1) de nacelle (2) et d'une soufflante (3) de turbomachine (7) d'ensemble propulsif d'aéronef (8) selon l'une des revendications 1 à 7, dans lequel :

- lors d'une phase de poussée (A), la lèvre d'entrée d'air (15) sépare un flux d'air amont (F) circulant d'amont en aval en un flux d'air extérieur (F-EXT) guidé par la paroi extérieure (14) et un flux d'air intérieur (F-INT) guidé par la paroi intérieure (13), et
- lors d'une phase d'inversion de poussée (B) mise en oeuvre par modification du calage des aubes de la soufflante (3), les points de courbure maximale (P, P', P") décollent de l'enveloppe externe périphérique (11) un flux d'air inverse (F-INV) circulant d'aval en amont dans l'entrée d'air (1) pour rejoindre le flux d'air extérieur (F-EXT), de manière à favoriser la phase d'inversion de poussée (B).

## Patentansprüche

1. Anordnung aus einem Lufteinlass (1) einer Gondel (2) und einem Gebläse (3) einer Turbomaschine (7) einer Luftfahrzeug-Antriebseinheit (8), wobei sich die Luftfahrzeug-Antriebseinheit (8) gemäß einer Längsachse (X) erstreckt, die von stromaufwärts nach stromabwärts gerichtet ist, und eine Turbomaschine (7) umfasst, die einen radial inneren Primärkanal (4) und einen radial äußeren Sekundärkanal (5) umfasst, die ausgelegt sind, um während einer Schubphase (A) jeweils einen Primärluftstrom (F1) und einen Sekundärluftstrom (F2) von stromaufwärts nach stromabwärts zu führen, wobei das Gebläse (3) ausgelegt ist, um stromaufwärts der Turbomaschine (7) angebracht zu sein, wobei das Gebläse (3) um die Längsachse (X) drehbar angebracht ist, wobei die Luftfahrzeug-Antriebseinheit (8) Schubumkehrmittel umfasst, die ausgelegt sind, um den Sekundärluftstrom (F2) in einen umgekehrten Luftstrom (F-INV) umzuwandeln, der während einer Schubumkehrphase (B) von stromabwärts nach stromaufwärts im Sekundärkanal (5) zirkuliert, wobei das Gebläse (3) eine Vielzahl von Schaufeln mit variabler Verstellung aufweist, um die Schubumkehrmittel der Luftfahrzeug-Antriebseinheit (8) zu bilden, wobei die Gondel (2) ausgelegt ist, um sich außen um die Turbomaschine (7) herum zu erstrecken, wobei der Lufteinlass (1) ausgelegt ist, um sich am stromaufwärtigen Ende der Gondel (2) zu erstrecken, wobei sich der Lufteinlass (1) außen um das Gebläse (3) herum erstreckt, wobei der Lufteinlass (1) einen äußeren Umfangsmantel (11) mit einer Längsachse (X) umfasst, die eine der Längsachse (X) zugewandte Innenwand (13) und eine der Innenwand (13) gegenüberliegende Außenwand (14) umfasst, die stromaufwärts durch eine Lufteinlasslippe (15) verbunden sind, die eine Vorderkante umfasst, um die Schubphase (A) zu begünstigen, wobei der Lufteinlass (1) einen Innenradius im Bereich des Gebläses (3) aufweist, bezeichnet als "Gebläseradius (R3)", wobei der äußere Umfangsmantel (11) eine variable Krümmung in einer Ebene radial zur Längsachse (X) aufweist, wobei die Anordnung **dadurch gekennzeichnet ist, dass**:

   • der Lufteinlass (1) ein festes und unverformbares Profil aufweist, so dass es zwischen der Schubphase (A) und der Schubumkehrphase (B) unverändert bleibt,
   • der äußere Umfangsmantel (11) in jeder radialen Ebene einen Punkt maximaler Krümmung (P, P', P") aufweist, so dass der umgekehrte Luftstrom (F-INV) vom äußeren Umfangsmantel (11) gelöst wird, um eine Schubumkehrphase (B) zu begünstigen, wobei ein Schmiegungskreis (C, C') einen Krümmungsradius (R, R') aufweist, der an jedem der Punkte maximaler Krümmung (P, P', P") definiert ist, wobei der Mittelwert (Rmoy) der Krümmungsradien (R, R') am Umfang des Lufteinlasses (1) das folgende Verhältnis erfüllt: Rmoy < 0,028 * R3.

2. Anordnung nach Anspruch 1, wobei der Mittelwert (Rmoy) der Krümmungsradien (R, R') das folgende Verhältnis erfüllt: Rmoy < 0,02 * R3, und vorzugsweise das folgende Verhältnis: Rmoy < 0,01 * R3.

3. Anordnung nach einem der Ansprüche 1 oder 2, wobei sich die Punkte maximaler Krümmung (P, P', P") des Lufteinlasses (1) in einem stromaufwärts gelegenen Abschnitt (16) des äußeren Umfangsmantels (11) befinden, der eine Längslänge (L16) aufweist, die von der Vorderkante der Lufteinlasslippe (15) aus definiert ist und das folgende Verhältnis erfüllt: L16 < 6 * Rmoy, vorzugsweise: L16 < 4 * Rmoy, und bevorzugt: L16 < 2 * Rmoy.

4. Anordnung nach einem der Ansprüche 1 bis 3, wobei sich die Punkte maximaler Krümmung (P, P', P") an der Vorderkante der Lufteinlasslippe (15) befinden.

5. Anordnung nach einem der Ansprüche 1 bis 4, wobei die Punkte maximaler Krümmung (P, P', P") des Lufteinlasses (1) zusammen eine geschlossene Kurve bilden, bezeichnet als "Ablösekurve (Q, Q', Q")", die vorzugsweise zu einer Ebene quer zur Längsachse (X) gehört, vorzugsweise in Form eines Kreises mit einem Mittelpunkt, der von der Längsachse (X) durchquert wird.

6. Anordnung nach einem der Ansprüche 1 bis 5, wobei der Wert des Krümmungsradius (R, R') des Schmiegungskreises (C, C'), der in mindestens 25 % der Punkte maximaler Krümmung (P, P', P") definiert ist, im Wesentlichen gleich ist, vorzugsweise für mindestens 50 % der Punkte maximaler Krümmung (P, P', P"), und vorzugsweise für alle Punkte maximaler Krümmung (P, P', P").

7. Luftfahrzeug-Antriebsordnung (8), die sich gemäß einer Längsachse (X) erstreckt, die von stromaufwärts nach stromabwärts gerichtet ist, und eine Turbomaschine (7) und eine Gondel (2) umfasst, wobei die Turbomaschine (7) einen radial inneren Primärkanal (4) und einen radial äußeren Sekundärkanal (5) umfasst, die ausgelegt sind, um während einer Schubphase (A) jeweils einen Primärluftstrom (F1) und einen Sekundärluftstrom (F2) von stromaufwärts nach stromabwärts zu führen, wobei die Luftfahrzeug-Antriebseinheit (8) eine Anordnung aus einem Lufteinlass (1) und einem Gebläse (3) nach einem der Ansprüche 1 bis 6 umfasst, wobei die Turbomaschine (7) stromaufwärts das um die Längsachse (X) drehbar gelagerten Gebläse (3) umfasst, wobei die Luftfahrzeug-Antriebsordnung (8) Schubumkehrmittel umfasst, die von dem Gebläse (3) gebildet und ausgelegt sind, um den Sekundärluftstrom (F2) in einen umgekehrten Luftstrom (F-INV) umzuwandeln, der während einer Schubumkehrphase (B) von stromabwärts nach stromaufwärts im Sekundärkanal (5) zirkuliert, wobei sich die Gondel (2) außen um die Turbomaschine (7) herum erstreckt und an ihrem stromaufwärtigen Ende den Lufteinlass (1) umfasst, wobei die Luftfahrzeug-Antriebseinheit (8) vorzugsweise einen Verdünnungsgrad von über 20 aufweist.

8. Verfahren zur Verwendung einer Anordnung aus einem Lufteinlass (1) einer Gondel (2) und einem Gebläse (3) einer Turbomaschine (7) einer Luftfahrzeug-Antriebseinheit (8) nach einem der Ansprüche 1 bis 7, wobei:

   - bei einer Schubphase (A) die Lufteinlasslippe (15) einen von stromaufwärts nach stromabwärts zirkulierenden stromaufwärtigen Luftstrom (F) in einen von der Außenwand (14) geführten Außenluftstrom (F-EXT) und einen von der Innenwand (13) geführten Innenluftstrom (F-INT) trennt, und
   - bei einer Schubumkehrphase (B), die durch Änderung der Schaufelstellung des Gebläses (3) umgesetzt wird, die Punkte maximaler Krümmung (P, P', P") einen umgekehrten Luftstrom (F-INV), der im Lufteinlass (1) von stromabwärts nach stromaufwärts strömt, vom äußeren Umfangsmantel (11) lösen, um sich mit dem Außenluftstrom (F-EXT) zu verbinden, um die Schubumkehrphase (B) zu unterstützen.

**Claims**

1. Assembly of a nacelle (2) air intake (1) and of a fan (3) of a turbine engine (7) of an aircraft propulsion assembly (8), said aircraft propulsion assembly (8) extending along a longitudinal axis (X) oriented from upstream to downstream and comprising a turbine engine (7) comprising a radially inner primary flow path (4) and a radially outer secondary flow path (5) configured to guide from upstream to downstream respectively a primary air flow (F1) and a secondary air flow (F2) during a thrust phase (A), the fan (3) being configured to be mounted upstream of the turbine engine (7), the fan (3) being rotatably mounted about the longitudinal axis (X), said aircraft propulsion assembly (8) comprising thrust reversal means configured to modify the secondary air flow (F2) into a reverse airflow (F-INV) circulating from downstream to upstream in the secondary flow path (5) during a thrust reversal phase (B), said fan (3) comprising a plurality of variable-pitch blades so as to form the thrust reversal means of the aircraft propulsion assembly (8), said nacelle (2) being configured to extend outwardly around the turbine engine (7), the air intake (1) being configured to extend at the upstream end of the nacelle (2), said air intake (1) extending outwardly around the fan (3), said air intake (1) comprising a peripheral external enclosure (11) of longitudinal axis (X) comprising an inner wall (13) turned towards the longitudinal axis (X) and an outer wall (14) opposite the inner wall (13) which are connected upstream by an air intake lip (15) comprising a leading edge to promote the thrust phase (A), said air intake (1) comprising an inner radius at the fan (3) called "fan radius (R3)", said peripheral external enclosure (11) comprising a variable curvature in a plane radial to the longitudinal axis (X), assembly **characterized by** the fact that:

   • the profile of the air intake (1) is stationary and non-deformable, so that it remains unchanged between the thrust phase (A) and the thrust reversal phase (B),
   • the peripheral external enclosure (11) comprises, in each radial plane, a point of maximum curvature (P, P', P") so as to detach the reverse airflow (F-INV) from the peripheral external enclosure (11) in order to promote a thrust reversal phase (B), an osculating circle (C, C') comprising a radius of curvature (R, R') being defined at each of the points of maximum curvature (P, P', P"), the average value (Rmoy) of the radii of curvature (R, R') at the periphery of the air intake (1) verifying the following relationship: $Rmoy < 0.028 * R3$.

2. Assembly according to claim 1, wherein the average value (Rmoy) of the radii of curvature (R, R') verifies the following relationship: $Rmoy < 0.02 * R3$, and preferably the following relationship: $Rmoy < 0.01 * R3$.

3. Assembly according to one of claims 1 and 2, wherein the points of maximum curvature (P, P', P") of the air intake (1) are located in an upstream portion (16) of the peripheral external enclosure (11) which comprises a longitudinal length (L16) defined from the leading edge of the air intake lip (15) and verifying the following relationship: $L16 < 6 * Rmoy$, preferably: $L16 < 4 * Rmoy$, and preferably: $L16 < 2 * Rmoy$.

4. Assembly according to one of claims 1 to 3, wherein the points of maximum curvature (P, P', P") are located on the leading edge of the air intake lip (15).

5. Assembly according to one of claims 1 to 4, wherein the points of maximum curvature (P, P', P") of the air intake (1) together form a closed curve, called a "detaching curve (Q, Q', Q")", preferably belonging to a plane transverse to the longitudinal axis (X), preferably in the form of a circle of center crossed by the longitudinal axis (X).

6. Assembly according to one of claims 1 to 5, wherein the value of the radius of curvature (R, R') of the osculating circle (C, C') defined in at least 25% of the points of maximum curvature (P, P', P") is substantially identical, preferably for at least 50% of the points of maximum curvature (P, P', P"), and preferably for all the points of maximum curvature (P, P', P").

7. Aircraft propulsion assembly (8) extending along a longitudinal axis (X) oriented from upstream to downstream and comprising a turbine engine (7) and a nacelle (2), said turbine engine (7) comprising a radially inner primary flow path (4) and a radially outer secondary flow path (5) configured to guide from upstream to downstream respectively a primary air flow (F1) and a secondary air flow (F2) during a thrust phase (A), said aircraft propulsion assembly (8) comprising an assembly of an air intake (1) and a fan (3) according to one of claims 1 to 6, said turbine engine (7) comprising upstream the fan (3) rotatably mounted about the longitudinal axis (X), said aircraft propulsion assembly (8) comprising thrust reversal means formed by the fan (3) and configured to modify the secondary air flow (F2) into a reverse airflow (F-INV) circulating from downstream to upstream in the secondary flow path (5) during a thrust reversal phase (B), said nacelle (2) extending outwardly around the turbine engine (7) and comprising at its upstream end the air intake (1), the aircraft propulsion assembly (8) preferably comprising a dilution rate greater than 20.

8. Method of using an assembly of a nacelle (2) air intake (1) and a turbine engine (7) fan (3) of an aircraft propulsion assembly (8) according to one of claims 1 to 7, wherein:

- during a thrust phase (A), the air intake lip (15) separates an upstream air flow (F) circulating from upstream to downstream into an outer airflow (F-EXT) guided by the outer wall (14) and an inner airflow (F-INT) guided by the inner wall (13), and
- during a thrust reversal phase (B) implemented by modifying the pitch of the fan blades (3), the points of maximum curvature (P, **P'**, P") detach from the peripheral external enclosure (11) a reverse airflow (F-INV) circulating from downstream to upstream in the air intake (1) to join the outer airflow (F-EXT), in order to promote the thrust reversal phase (B).

[Fig. 1A]

FIG. 1A

[Fig. 1B]

FIG. 1B

[Fig. 2A]

FIG. 2A

[Fig. 2B]

FIG. 2B

[Fig. 3]

FIG. 3

[Fig. 4]

FIG. 4

[Fig. 5]

## FIG. 5

[Fig. 6]

## FIG. 6

[Fig. 7]

FIG. 7

[Fig. 8]

FIG. 8

[Fig. 9]

FIG. 9

[Fig. 10]

FIG. 10

**RÉFÉRENCES CITÉES DANS LA DESCRIPTION**

**Documents brevets cités dans la description**

- FR 2120172 A1
- FR 1904087 A1
- FR 1904094 A1
- FR 1904089 A1
- FR 1904096 A1
- FR 1904092 A1
- US 10399687 B2